# EUROPÄISCHE PATENTSCHRIFT

(11) **EP 2 727 238 B1**
(45) Veröffentlichungstag und Bekanntmachung des Hinweises auf die Patenterteilung: **22.04.2015**
(21) Anmeldenummer: 12721870.9
(22) Anmeldetag: 22.05.2012
(51) Int. Cl.: H02P 29/02, H02H 7/06, H02H 7/08, H02M 7/48, H02K 19/12, H02K 11/00

(54) **ELEKTRISCHE MASCHINE MIT SICHERHEITSSCHALTUNG**
ELECTRICAL MACHINE COMPRISING A SAFETY CIRCUIT
MOTEUR ÉLECTRIQUE COMPORTANT UN CIRCUIT DE SÉCURITÉ

(30) Priorität: 28.06.2011 DE 102011078158
(43) Veröffentlichungstag der Anmeldung: 07.05.2014
(73) Patentinhaber: Robert Bosch GmbH, 70442 Stuttgart (DE)
(72) Erfinder: NEUBURGER, Martin, 73312 Geislingen (DE); RIEGER, Vincent, 76227 Karlsruhe (DE)
(86) Internationale Anmeldenummer: PCT/EP2012/059475
(87) Internationale Veröffentlichungsnummer: WO 2013/000630

(56) Entgegenhaltungen:
- DE-B- 1 110 031
- JP-A- H02 133 097
- JP-A- 2010 098 790
- JP-A- 2011 062 010
- US-A- 2 557 298
- US-A- 3 938 005
- US-A- 4 280 161

## Beschreibung

### Technisches Gebiet

Die vorliegende Erfindung betrifft elektrische Maschinen, insbesondere elektrisch erregte elektrische Maschinen, wie z. B. hybriderregte oder fremderregte Maschinen. Insbesondere betrifft die vorliegende Erfindung elektrisch erregte elektrische Maschinen für den Einsatz in Lenksystemen und insbesondere Maßnahmen, um ein in einem Fehlerfall auftretendes Bremsmoment zu reduzieren.

### Stand der Technik

Fremderregte bzw. hybriderregte elektrische Maschinen benötigen im Vergleich zu permanentmagneterregten Maschinen zwei weitere elektrische Kontaktierungen für die Erregerwicklung. Die Erregerwicklung muss üblicherweise mit einer eigenen Ansteuereinheit, einer Erregerschaltung, angesteuert werden.

Alternativ kann die Erregerwicklung auch über die die Phasenstränge der elektrischen Maschine betreibende Treiberschaltung bestromt werden. In diesem Fall ist die Erregerwicklung zwischen einem Sternpunkt, über den die Phasenstränge der elektrischen Maschine miteinander verbunden sind, und einem Massepotential geschaltet.

Bei einem Ausfall der Treiberschaltung muss verhindert werden, dass die elektrische Maschine zusätzlich zu ihrer mechanischen Schwergängigkeit aufgrund des Wegfalls des Unterstützungsmoments ein elektrisches Bremsmoment aufbaut.

Bei einem Fehlerfall ist es notwendig, abhängig von der Art des Fehlerfalls, beispielsweise bei einem durchlegierten Pull-Up-Schalter, einen Einzelschalter weiter anzusteuern, um eine lenkunterstützte Heimfahrhilfe zu realisieren-bzw. alternativ ein auftrennbares Phasen- und/oder Sternpunktrelais vorzusehen.

Insbesondere wenn die Erregerwicklung zwischen einem Sternpunkt in der effektrischen Maschine und einem Massepotential angeschlossen ist, kann es in einem Fehlerfall sogar zu einer Übererregung kommen, durch die ein hohes Bremsmoment generiert würde. Bei einem Einsatz einer derartigen elektrischen Maschine in einem Lenksystem kann dies zur Unlenkbarkeit eines Fahrzeugs führen und stellt somit ein Sicherheitsrisiko dar.

Aufgrund der in der hybriderregten elektrischen Maschine zusätzlich zu der Erregerwicklung vorhandenen Erregermagnete können bei einem Kurzschlussfehler in der Treiberschaltung die in der elektrischen Maschine vorhandenen Permanentmagnete eine induzierte Spannung generieren, die sich über den kurzgeschlossenen Schalter freiläuft, einen Stromfluss generiert und dadurch ein zu dem äußeren Moment entgegengesetzt wirkendes elektrisches Bremsmoment ausübt. Dieser Fehlerfall ist für eine hybriderregte elektrische Maschine mit Abgriff der Erregerwicklung im Sternpunkt besonders kritisch, da hier durch den Fehlerfall die Sternpunktspannung angehoben wird und sich die Maximalerregung bzw. ein übererregter Zustand einstellen kann.

Maßnahmen, den Sternpunkt der elektrischen Maschine bei Auftreten eines Fehlerfalls aufzutrennen, sind in der Regel aufwändig, da hierzu ein spezieller Schalter, z. B. ein Stempunktrelais, notwendig ist.

Die Druckschrift JP 02133097 offenbart eine mehrphasige elektrisch erregte Maschine mit einer Erregerwicklung, die über einen separaten Erregerstromkreis mit elektrischer Energie gespeist wird. In dem Erregerstromkreis sind Schmelzsicherungen vorgesehen.

Die Druckschriften JP 2011/062010 und DE 11 10 031 zeigen jeweils eine elektrisch erregte Maschine mit einer an einem Sternpunkt von Phasenwicklungen gekoppelten Erregerwicklung.

Die Druckschrift JP 2010/098790 zeigt eine elektronisch kommutierte elektrische Maschine mit über einen Sternpunkt verschaltete Phasenstränge. Der Sternpunkt ist auf ein Mittenpotenzial gelegt, wobei der Sternpunkt weiterhin mit einer Schmelzsicherung gekoppelt ist.

Es ist daher Aufgabe der vorliegenden Erfindung, ein Sicherungskonzept für eine elektrisch erregte elektrische Maschine vorzusehen, das es in einfacher Weise ermöglicht, das in einem Fehlerfall möglicherweise auftretende Bremsmoment zu reduzieren.

### Offenbarung der Erfindung

Diese Aufgabe wird durch die elektrisch erregte elektrische Maschine zum Einsatz in einem Lenksystem gemäß Anspruch 1 sowie durch das Motorsystem gemäß dem nebengeordneten Anspruch gelöst.

Weitere vorteilhafte Ausgestaltungen der vorliegenden Erfindung sind in den abhängigen Ansprüchen angegeben.

Gemäß einem ersten Aspekt ist eine elektrisch erregte elektrische Maschine vorgesehen, insbesondere zum Einsatz in einem Lenksystem in einem Kraftfahrzeug. Die Maschine umfasst:
- einen Stator mit einer Statorwicklung, die mehrere Phasenstränge aufweist;
- einen zumindest teilweise mit weichmagnetischem Material versehenen Rotor, der beweglich zu dem Stator angeordnet ist;
- eine Erregerwicklung, die so angeordnet ist, um ein Erregermagnetfeld in den Rotor einzukoppeln, so dass sich ein Magnetfeld in einem Luftspalt zwischen dem Stator und dem Rotor ausbildet;
- einen Erregerstromkreis, der eine Sicherung aufweist, die bei einem Überstrom selbsttätig auslöst.

Eine Idee der obigen elektrischen Maschine besteht darin, die Erregerwicklung mit einer separaten Sicherung zu versehen, die bei einem Überstrom aufgrund eines Fehlerfalls selbsttätig auslöst. Somit kann der Erregerkreis in einem Fehlerfall unabhängig von der Energieversorgung über die Phasenstränge zuverlässig abgeschaltet werden, so dass in einem Fehlerfall kein unerwünschtes Bremsmoment auftreten kann. Aus diesem Grund eignet sich eine derartige fremderregte bzw. hybriderregte elektrische Maschine mit einer solchen Sicherung besonders für den Einsatz in Lenksystemen und anderen sicherheitskritischen Einrichtungen, bei denen im Fehlerfall kein Bremsmoment durch die elektrische Maschine ausgeübt werden darf.

Weiterhin kann die Sicherung eine Schmelzsicherung aufweisen.

Gemäß einer Ausführungsform können die Erregerwicklung, der Erregerstromkreis und die Sicherung an oder in einem Gehäuse der elektrischen Maschine angeordnet sein.

Es kann vorgesehen sein, dass der Erregerstromkreis mit einem Sternpunkt verbunden ist, über den die Phasenstränge miteinander verschaltet sind.

Ferner kann eine Treiberschaltung zum Bereitstellen der Phasenströme durch die Phasenstränge der elektrischen Maschine vorgesehen sein, wobei die Treiberschaltung durch eine Steuereinheit ansteuerbar ist.

Die Steuereinheit kann ausgebildet sein, um einen Fehlerfall zu detektieren und um nach einer Detektion des Fehlerfalls die Treiberschaltung so anzusteuern, dass an einen der Phasenstränge dauerhaft ein hohes Versorgungspotential angelegt wird, so dass das Potential an einem Sternpunkt, über den die Phasenstränge miteinander verschaltet sind, ansteigt und den Stromfluss durch den Erregerstromkreis erhöht.

Weiterhin kann die Sicherung ausgebildet sein, um bei dem erhöhten Stromfluss durch den Erregerstromkreis auszulösen.

Gemäß einem weiteren Aspekt ist ein Motorsystem vorgesehen. Das Motorsysfern umfasst:
- die obige elektrische Maschine;
- eine Treiberschaltung zum Bestromen der Phasenstränge der elektrischen Maschine; und
- eine Steuereinheit zum Ansteuern der Treiberschaltung.

Gemäß einem weiteren Aspekt ist ein Verfahren zum Betreiben des obigen Motorsystems vorgesehen, wobei nach einer Detektion eines Fehlerfalls dauerhaft ein hohes Versorgungspotential an einen der Phasenstränge angelegt wird, so dass das Potential an einem Sternpunkt, über den die Phasenstränge miteinander verschaltet sind, ansteigt und den Stromfluss durch den Erregerstromkreis erhöht.

Insbesondere kann bei dem erhöhten Stromfluss durch den Erregerstromkreis die Sicherung ausgelöst werden.

### Kurzbeschreibung der Zeichnungen

Bevorzugte Ausführungsformen der vorliegenden Erfindung werden nachfolgend anhand der beigefügten Zeichnung näher erläutert. Es zeigt:

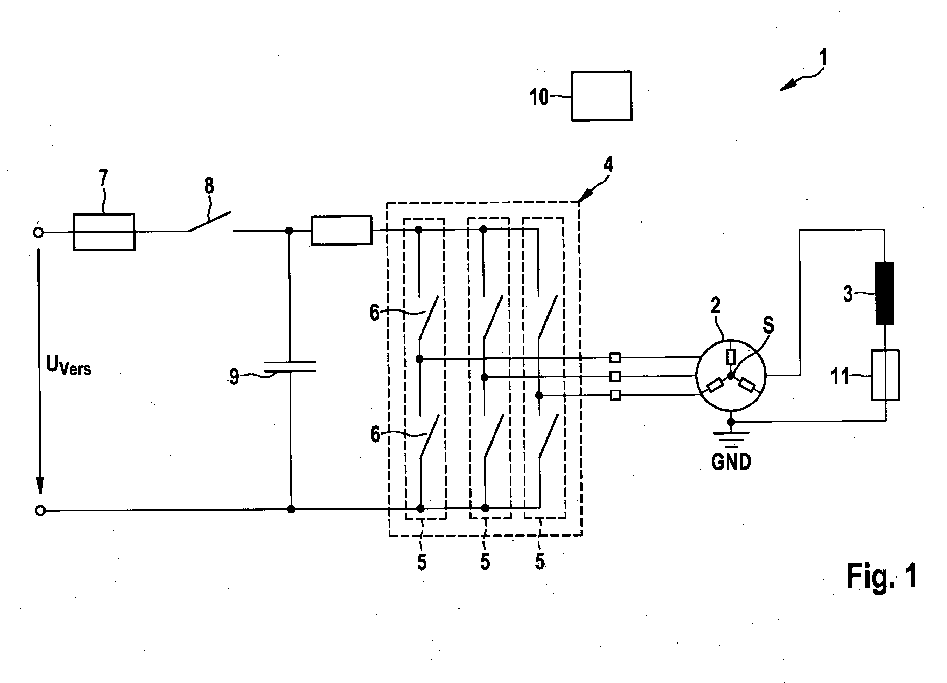

- Figur 1: eine schematische Darstellung eines Motorsystems mit einer fremderregten elektrischen Maschine gemäß einer Ausführungsform.

### Beschreibung von Ausführungsformen

Figur 1 zeigt ein Motorsystem 1 mit einer elektrischen Maschine 2, die im vorliegenden Fall dreiphasig ausgebildet ist. Die elektrische Maschine 2 weist eine Statoranordnung mit drei Phasensträngen auf, die in einer Sternpunktschaltung über einen Sternpunkt S miteinander verschaltet sind.

Der (nicht gezeigte) Rotor der elektrischen Maschine 2 ist aus weichmagnetischem Material ausgebildet und wird durch eine Erregerwicklung 3, die ortsfest angeordnet ist, mit einem Erregermagnetfeld beaufschlagt, das im Wesentlichen die gleiche Funktion wie die Permanentmagnete im Rotor einer Synchronmaschine hat. Die Erregerwicklung 3 ist üblicherweise statorintern ausgebildet, so dass das Erregermagnetfeld in den Rotor eindringt und dort umgelenkt wird, so dass sich in einem Luftspalt zwischen Rotorpolen des Rotors und dem Stator ein magnetisches Feld ausbildet, das zum Antrieb des Rotors dient.

Zur Bestromung des mit der Erregerwicklung 3 gebildeten Stromkreises wird die Erregerwicklung 3 im gezeigten Ausführungsbeispiel zwischen dem Sternpunkt S, über den die Phasenstränge des Stators miteinander verbunden sind, und einem Massepotential GND geschaltet.

Die elektrische Maschine 2 wird weiterhin von einer Treiberschaltung 4 betrieben, die in Form einer B6-Schaltung ausgebildet ist. Eine B6-Schaltung weist drei Inverterschaltungen 5 mit jeweils zwei in Reihe geschalteten Halbleiterschaltern 6 auf, zwischen denen jeweils ein Knoten als Abgriff für den Anschluss eines der Phasenstränge der elektrischen Maschine 2 vorgesehen ist. Die Halbleiterschalter 6 werden mithilfe einer Steuereinheit 10 geschaltet, üblicherweise gemäß einem Kommutierungsschema. Die an der Treiberschaltung 4 anliegende Spannung liegt über jeder der Inverterschaltungen 5 an. Weiterhin ist ein Zwischenkreiskondensator 9 vorgesehen, über den die Versorgungsspannung U_{Vers} anliegt.

An die Treiberschaltung 4 ist eine Versorgungsspannung U_{Vers} zwischen einem hohen Versorgungspotential V_{H} und einem niedrigen Versorgungspotential V_{L} angelegt, die über eine erste Sicherung 7 und ein dazu in Reihe geschaltetes Schaltrelais 8 mit der Treiberschaltung 4 verbunden ist. Die erste Sicherung 7 ist so dimensioniert, dass ein Maximalstrom, der bei Anliegen der vollen Versorgungsspannung U_{Vers} durch zwei Phasenstränge der elektrischen Maschine 2 fließt, noch nicht ausreicht, um die Sicherung auszulösen. Vorzugsweise ist die Auslöseschwelle abhängig von diesem Maximalstrom und einer vorgegebenen Toleranz festgelegt. Bei Auftreten eines Kurzschlusses zwischen dem hohen Versorgungspotential V_{H} und einem niedrigen Versorgungspotential V_{L}, insbesondere bei Auftreten eines Kurzschlusses durch eine der Inverterschaltungen 5 unter Umgehung eines Stromflusses durch die Phasenstränge, löst die erste Sicherung 7 aufgrund des geringeren Widerstands des Kurzschlusspfades aus.

Es ist eine zweite Sicherung 11 im Erregerkreis vorgesehen, die so ausgelegt ist, dass sie eine Übererregung vermeidet. Insbesondere kann die zweite Sicherung 11 so ausgelegt sein, dass sie einen Strom, der sich bei einer halben Versorgungsspannung U_{Vers} durch den Erregerkreis einstellt, tragen kann. Die halbe Versorgungsspannung U_{Vers} /2 liegt im Normalbetriebsfall an dem Sternpunkt S der elektrischen Maschine 2 an. Die zweite Sicherung 11 löst aus, sobald die Stromstärke in dem Erregerkreis diesen Wert deutlich, beispielsweise um einen Toleranzbereich von 10%, übersteigt. Dadurch kann erreicht werden, dass die Erregerwicklung 3 deaktiviert wird, so dass kein Bremsmoment mehr bewirkt werden kann.

Befindet sich die Erregerwicklung 3 in einer hybriderregten elektrischen Maschine, so kann dadurch zumindest das Bremsmoment auf die Wirkung der Permanentmagnete im Rotor der elektrischen Maschine 2 reduziert werden. Auch eine aufgrund eines etwaigen Anstiegs der Sternpunktspannung auftretende Übererregung, die zu einem zusätzlichen Bremsmoment führen könnte, kann so verhindert werden.

Die Phasenstränge und die Erregerwicklung 3 sind vorzugsweise in der elektrischen Maschine 2 angeordnet. Aus diesem Grund ist es zweckmäßig, auch die zweite Sicherung 11 im Inneren der elektrischen Maschine 2 anzuordnen. Die erste Sicherung 7 und/oder die zweite Sicherung 11 sind vorzugsweise als Schmelzsicherungen und insbesondere als Sicherungen ausgebildet, die ein selbsttätiges und permanentes Auslösen, d. h. ein Öffnen des zu schützenden Stromkreises, bewirken.

Durch das Vorsehen der zweiten Sicherung 11 in dem Erregerkreis kann eine Sicherungsfunktion realisiert werden, die im Fehlerfall völlig unabhängig vom Rest des Motorsystems 1 einen sicheren Zustand realisiert und das Motorsystem 1 vollständig abschaltet. Aufgrund der Unabhängigkeit des Abschaltfalls des Erregerkreises sind wesentliche Zusatzmaßnahmen innerhalb der Steuerelektronik nicht notwendig.

Es kann weiterhin vorgesehen sein, dass durch Ansteuerung eines der Halbleiterschalter 6, der mit dem hohen Versorgungspotential V_{H} verbunden ist, durch die Steuereinheit 10 einer der Phasenstränge über einen längeren Zeitraum bzw. dauerhaft mit einem hohen Versorgungspotential V_{H} verbunden wird, um so die Sternpunktspannung anzuheben. Damit ist es möglich, bei Erkennen eines aufgetretenen Fehlerfalls die zweite Sicherung 11 durch entsprechende Ansteuerung der Halbleiterschalter 6 der Treiberschaltung 4 auszulösen.

## Patentansprüche

1. Hybriderregte elektrische Maschine (2), insbesondere zum Einsatz in einem Lenksystem in einem Kraftfahrzeug, umfassend:
- einen Stator mit einer Statorwicklung, die mehrere Phasenstränge verschaltet über einen Sternpunkt (S) aufweist;
- eine Erregerwicklung (3), die so angeordnet ist, um ein Erregermagnetfeld in einen beweglich zu dem Stator angeordneten Rotor einzukoppeln, so dass sich ein Magnetfeld in einem Luftspalt zwischen dem Stator und dem Rotor ausbildet; und
- einen Erregerstromkreis, der mit einem Sternpunkt der Statorwicklung verbunden ist und die eine Sicherung (11) aufweist, die selbsttätig bei einem Überstrom auslöst.

2. Elektrische Maschine (2) nach Anspruch 1, wobei die Sicherung (11) eine Schmelzsicherung aufweist.

3. Elektrische Maschine (2) nach Anspruch 1 oder 2, wobei die Erregerwicklung, der Erregerstromkreis und die Sicherung (11) an oder in einem Gehäuse der elektrischen Maschine (2) angeordnet sind.

4. Elektrische Maschine (2) nach einem der Ansprüche 1 bis 3, wobei eine Treiberschaltung (4) zum Bereitstellen der Phasenströme durch die Phasenstränge der elektrischen Maschine (2) vorgesehen ist, wobei die Treiberschaltung (4) durch eine Steuereinheit (10) ansteuerbar ist.

5. Elektrische Maschine (2) nach Anspruch 4, wobei die Steuereinheit (10) ausgebildet ist, um einen Fehlerfall zu detektieren und um nach einer Detektion des Fehlerfalls die Treiberschaltung (4) so anzusteuern, dass an einen der Phasenstränge dauerhaft ein hohes Versorgungspotential angelegt wird, so dass das Potential an einem Sternpunkt (S), über den die Phasenstränge miteinander verschaltet sind, ansteigt und den Stromfluss durch den Erregerstromkreis erhöht.

6. Elektrische Maschine (2) nach Anspruch 5, wobei die Sicherung (11) ausgebildet ist, um bei dem erhöhten Stromfluss durch den Erregerstromkreis auszulösen.

7. Motorsystem (1) umfassend:
- eine hybriderregte elektrische Maschine (2) nach einem der Ansprüche 1 bis 6;
- eine Treiberschaltung (4) zum Bestromen der Phasenstränge der elektrischen Maschine (2);
- eine Steuereinheit (10) zum Ansteuern der Treiberschaltung (4).

8. Verfahren zum Betreiben eines Motorsystems (1) nach Anspruch 7, wobei nach einer Detektion eines Fehlerfalls dauerhaft ein hohes Versorgungspotential an einen der Phasenstränge angelegt wird, so dass das Potential an einem Sternpunkt (S), über den die Phasenstränge miteinander verschaltet sind, ansteigt und den Stromfluss durch den Erregerstromkreis erhöht.

9. Verfahren nach Anspruch 8, wobei bei dem erhöhten Stromfluss durch den Erregerstromkreis die Sicherung (11) ausgelöst wird.

## Claims

1. Electrical machine (2) with hybrid excitation, in particular for use in a steering system in a motor vehicle, comprising:
- a stator having a stator winding which has a plurality of winding phases connected via a star point (S) ;
- a field winding (3) which is arranged so as to couple an excitation magnetic field into a rotor which is arranged such that it can move in relation to the stator, so that a magnetic field is formed in an air gap between the stator and the rotor; and
- a field circuit which is connected to a star point of the stator winding and which has a fuse (11) which trips automatically in the event of an overcurrent.

2. Electrical machine (2) according to Claim 1, wherein the fuse (11) has a fusible link.

3. Electrical machine (2) according to Claim 1 or 2, wherein the field winding, the field circuit and the fuse (11) are arranged on or in a housing of the electrical machine (2).

4. Electrical machine (2) according to one of Claims 1 to 3, wherein a driver circuit (4) for supplying the phase currents through the winding phases of the electrical machine (2) is provided, wherein the driver circuit (4) can be actuated by a control unit (10).

5. Electrical machine (2) according to Claim 4, wherein the control unit (10) is designed in order to detect a fault and, after the fault is detected, in order to actuate the driver circuit (4) such that a high supply potential is permanently applied to one of the winding phases, so that the potential at a star point (S), by means of which the winding phases are interconnected, rises and increases the current flow through the field circuit.

6. Electrical machine (2) according to Claim 5, wherein the fuse (11) is designed in order to trip in the event of the increased current flow through the field circuit.

7. Motor system (1) comprising:
- an electrical machine (2) with hybrid excitation according to one of Claims 1 to 6;
- a driver circuit (4) for supplying current to the winding phases of the electrical machine (2);
- a control unit (10) for actuating the driver circuit (4).

8. Method for operating a motor system (1) according to Claim 7, wherein, after a fault is detected, a high supply potential is permanently applied to one of the winding phases, so that the potential at a star point (S), by means of which the winding phases are interconnected, rises and increases the current flow through the field circuit.

9. Method according to Claim 8, wherein the fuse (11) is tripped in the event of the increased current flow through the field circuit.

## Revendications

1. Moteur électrique (2) à excitation hybride, notamment utilisé dans un système de direction placé dans un véhicule automobile, comprenant :
- un stator avec un enroulement de stator comportant plusieurs chaînes de phase connectées via un point étoile (S) ;
- un enroulement d'excitateur (3) disposé de telle sorte, pour coupler un champ magnétique d'excitateur dans un rotor disposé de façon mobile par rapport au stator, qu'un champ magnétique se forme dans un interstice d'air prévu entre le stator et le rotor ; et
- un circuit de courant d'excitateur relié à un point étoile de l'enroulement de stator et comportant un coupe-circuit (11) se déclenchant automatiquement en cas de surintensité.

2. Moteur électrique (2) selon la revendication 1, le coupe-circuit (11) comportant un coupe-circuit à fusible.

3. Moteur électrique (2) selon la revendication 1 ou 2, l'enroulement d'excitateur, le circuit de courant d'excitateur et le coupe-circuit (11) étant disposés au niveau d'un carter du moteur électrique (2) ou dans celui-ci.

4. Moteur électrique (2) selon l'une quelconque des revendications 1 à 3, un circuit de pilote (4) servant à mettre à disposition les courants de phase à travers les chaînes de phase du moteur électrique (2) étant prévu, le circuit de pilote (4) pouvant être commandé par une unité de commande (10).

5. Moteur électrique (2) selon la revendication 4, l'unité de commande (10) étant réalisée pour détecter un cas d'anomalie et pour commander, une fois le cas d'anomalie détecté, le circuit de pilote (4) de telle sorte qu'un potentiel d'alimentation élevé est placé de façon durable au niveau d'une des chaînes de phase, de sorte que le potentiel augmente au niveau d'un point étoile (S) au travers duquel les chaînes de phase se connectent entre elles et que le débit de courant augmente à travers le circuit de courant d'excitateur.

6. Moteur électrique (2) selon la revendication 5, le coupe-circuit (11) étant réalisé pour se déclencher en cas de débit de courant accru au travers du circuit de courant d'excitateur.

7. Système de moteur (1) comprenant :
- un moteur électrique (2) à excitation hybride selon l'une quelconque des revendications 1 à 6 ;
- un circuit de pilote (4) permettant d'alimenter les chaînes de phase du moteur électrique (2) ;
- une unité de commande (10) permettant de commander le circuit de pilote (4).

8. Procédé de pilotage d'un système de moteur (1) selon la revendication 7, sachant qu'après détection d'un cas d'anomalie, un haut potentiel d'alimentation est placé de façon durable au niveau d'une des chaînes de phase, de sorte que le potentiel augmente au niveau d'un point étoile (S) au travers duquel les chaînes de phase sont connectées entre elles et que le débit de courant augmente à travers le circuit de courant d'excitateur.

9. Procédé selon la revendication 8, le coupe-circuit (11) étant déclenché en cas de débit de courant accru au travers du circuit de courant d'excitateur.
